# DEMANDE DE BREVET EUROPEEN

(11) **EP 2 129 094 A1**
(43) Date de publication de la demande: **02.12.2009**
(21) Numéro de dépôt: 09305457.5
(22) Date de dépôt: 19.05.2009
(51) Int. Cl.: H04M 3/56, G06Q 10/00, H04L 12/58, H04L 29/08

(54) **Sessions de messagerie instantaneé transparentes**

(30) Priorité: 30.05.2008 FR 0853579
(71) Demandeur: FRANCE TELECOM, 75015 Paris (FR)
(72) Inventeur: Bou Farah, Mira, 92120 Montrouge (FR); Brun, Arnaud, 92100, BOULOGNE BILLANCOURT (FR)

(57) **Abrégé**

L'invention se rapporte à un procédé comprenant :
- une étape d'établissement d'une session de messagerie instantanée entre un premier client d'un système de messagerie instantanée et au moins un deuxième client dudit système.

Comme nouvelle caractéristique le procédé comprend :
- au moins une étape de signalisation dudit établissement à au moins un troisième client dudit système.

De cette façon, un utilisateur de du troisième client peut être mis au courant de l'établissement de la session de messagerie instantanée entre le premier client et le deuxième client.

## Description

L'invention se rapporte à un procédé comprenant :
- une étape d'établissement d'une session de messagerie instantanée entre un premier client d'un système de messagerie instantanée et au moins un deuxième client dudit système.

On connaît actuellement dans l'état de la technique des systèmes dits de messagerie instantanée. Un tel système permet un échange de messages dits instantanés entre au moins deux utilisateurs. Chaque utilisateur doit disposer d'un logiciel appelé "client de messagerie instantanée" ou "client" tout court. L'échange d'un message instantané se fait par l'intermédiaire d'un serveur central auquel les clients sont connectés. L'échange d'un message est instantané ou quasi instantané ce qui veut dire que tous les utilisateurs doivent utiliser leur client en même temps afin qu'ils puissent effectivement échanger des messages. On dit aussi que tous les utilisateurs doivent être "en ligne" (ou avec une expression anglaise "on line") en même temps. De ce fait, on utilise l'adjectif "instantané" pour faire la distinction entre un système de messagerie instantanée et d'autres systèmes de messagerie où l'échange n'est pas instantané, par exemple des systèmes pour l'envoi des courriers électroniques (également connus sous l'appellation anglaise "e-mails"). Si un utilisateur B est en train d'échanger des messages instantanés avec un utilisateur C, on dit qu'une session de messagerie instantanée ("session IM") est ouverte (ou "en cours" ou "établie", dans ce cadre on parle aussi de l'établissement d'une session IM) entre les deux utilisateurs B et C. Un utilisateur d'un système de messagerie instantanée dispose d'une liste de contacts. Dans cette liste on trouve des identifiants d'autres utilisateurs du système que l'utilisateur en question y a enregistrés. Il s'agit donc ici d'un sous-ensemble de tous les utilisateurs potentiels du système de messagerie instantanée. A chaque identifiant inclus dans la liste de contact d'un utilisateur correspond un état de connexion. Cet état de connexion peut par exemple être "en ligne" dans le cas où l'utilisateur correspondant utilise son client de messagerie instantanée, ou "déconnecté" dans le cas où l'utilisateur correspondant n'a pas démarré son client de messagerie instantanée, ou "occupé" dans le cas où l'utilisateur correspondant souhaite communiquer aux autres utilisateurs que, bien qu'il ait démarré son client de messagerie instantanée, il n'est quand même momentanément pas vraiment disponible pour un échange des messages.

Disons que l'utilisateur B a dans sa liste de contact l'utilisateur C et A. Ceci signifiera donc que les utilisateurs C et A auront au moins l'utilisateur B dans leur propres listes de contact respectives. Le comportement actuel est notamment le suivant :
Si l'utilisateur C ajoute l'utilisateur B comme contact, un message d'autorisation est envoyé à l'utilisateur B. Cet utilisateur B peut donc accepter ou refuser l'ajout de l'utilisateur C à sa liste de contact. Les possibilités suivantes se présentent :
   - L'utilisateur B n'a pas (encore) accepté l'ajout, l'utilisateur C ne peut pas visualiser l'état de connexion de l'utilisateur B : l'état de connexion de l'utilisateur B est "désactivé". L'utilisateur C ne peut pas démarrer une session IM avec l'utilisateur B.
   - L'utilisateur B refuse l'ajout. Dans ce cas, l'utilisateur C ne peut pas visualiser l'état de connexion de l'utilisateur B (l'état de connexion de l'utilisateur B reste donc "désactivé"). L'utilisateur C ne peut donc pas démarrer une session IM avec l'utilisateur B.
   - L'utilisateur B accepte l'ajout. Dans ce cas, l'utilisateur C peut visualiser ensuite l'état de connexion de l'utilisateur B et l'identifiant de l'utilisateur B s'inscrit donc dans la liste de contact de l'utilisateur C. L'identifiant de l'utilisateur C s'inscrit aussi dans la liste de contacts de l'utilisateur B, et l'utilisateur B visualisera l'état de connexion de l'utilisateur C. L'utilisateur B et l'utilisateur C pourront ensuite démarrer une "session IM" pour échanger des messages instantanés.

Un utilisateur peut actuellement voir si les utilisateurs inclus dans sa la liste de contact utilisent leur client ou pas. On dit, comme il sera compris par l'homme du métier, que l'utilisateur a la possibilité de voir si les utilisateurs dans sa liste de contact sont "en ligne".

Toutefois, et comme les inventeurs l'ont observé, il est impossible pour un utilisateur de voir si un utilisateur de sa liste de contact est en train d'échanger des messages avec quelqu'un d'autre, autrement dit si une session de messagerie instantanée impliquant cet utilisateur est ouverte.

Egalement, et comme les inventeurs l'ont observé, il est actuellement impossible pour un utilisateur, en reprenant l'exemple ci-dessus, disons l'utilisateur A, de savoir avec **qui** un utilisateur, disons l'utilisateur B, dont l'identifiant se trouve dans sa liste de contact de l'utilisateur A, a une session de messagerie instantanée ouverte.

Ces sont donc des inconvénients de l'état actuel de la technique.

L'invention propose une solution qui ne présente pas les inconvénients précités.

Le procédé selon l'invention est donc **caractérisé en ce que** ledit procédé comprend :
- au moins une étape de signalisation dudit établissement à au moins un troisième client dudit système.

Avantageusement, suite au signal envoyé pendant l'étape de signalisation au troisième client, un utilisateur de celui-ci sera au courant de l'établissement de la session de messagerie instantanée entre le premier client et le deuxième client. Puisque les clients sont utilisés par des utilisateurs respectifs, l'utilisateur du troisième client saura que l'utilisateur du premier client est en communication avec l'utilisateur du deuxième client.

Dans un mode de réalisation, le procédé est **caractérisé en ce que** ledit troisième client appartient à un ensemble de clients liés au premier client.

Dans un mode de réalisation, le procédé est **caractérisé en ce qu**'il comprend une seule étape de visualisation dudit établissement chez ledit troisième client.

Dans un mode de réalisation, le procédé est **caractérisé en ce que** le procédé comprend en outre :
- une étape de formulation d'une demande de participation à ladite session par ledit troisième client et
- une étape de traitement de ladite demande par au moins ledit premier client.

Avantageusement, si le traitement consiste en une acceptation de la demande par le premier client (et/ou le deuxième client) ou plutôt par leur utilisateurs respectifs, l'utilisateur du troisième client peut participer à la session IM qui est en cours entre le premier client et le deuxième client.

L'invention se rapporte aussi à un serveur apte à être utilisé dans un système de messagerie instantanée comprenant des moyens de signalisation à un troisième client dudit système d'un établissement d'une session de messagerie instantanée entre un premier client dudit système et au moins un deuxième client dudit système, et des moyens de sauvegarde dudit établissement.

L'invention se rapporte aussi à un client apte à être utilisé dans un système de messagerie instantanée comprenant des moyens de signalisation à au moins un troisième client dudit système d'un établissement d'une session de messagerie instantanée entre ledit client et au moins un deuxième client dudit système, et des moyens de sauvegarde dudit établissement.

L'invention se rapporte aussi à un client apte à être utilisé dans un système de messagerie instantanée comprenant des moyens de réception de l'information sur un établissement d'une session de messagerie instantanée entre un première client dudit système et au moins un deuxième client dudit système et des moyens de visualisation dudit établissement.

L'invention se rapporte aussi à un système de messagerie instantanée comprenant un serveur comme décrit ci-dessus, ou au moins un client comme décrit ci-dessus et au moins un autre client comme décrit ci-dessus.

L'invention se rapporte aussi à client comme décrit ci-dessus comprenant des moyens de formulation d'une demande de participation à ladite session.

L'invention se rapporte aussi à client comme décrit ci-dessus comprenant des moyens de traitement d'une demande de participation à ladite session.

Les inventeurs ont aussi observé que même si l'utilisateur A sait que l'utilisateur B a une session de messagerie instantanée en cours avec un utilisateur C, il lui est toutefois impossible de participer à cette session.

Ceci est donc un autre inconvénient de l'état actuel de la technique.

L'invention propose aussi une solution qui ne présente pas l'inconvénient précité.

L'invention concerne donc aussi un procédé de communication **caractérisé en ce que** le procédé comprend en outre :
- une étape de formulation d'une demande de participation par un troisième client à une session de messagerie instantanée établie entre un premier client d'un système de messagerie instantanée et au moins un deuxième client dudit système et
- une étape de traitement de ladite demande par au moins ledit premier client.

L'invention sera mieux comprise à l'aide de la description suivante, faite à titre d'exemple non-limitatif et en regard des dessins annexés, dans lesquels :
- la figure 1 est un schéma fonctionnel décrivant le procédé selon l'invention, et
- la figure 2 est un schéma fonctionnel décrivant un mode de réalisation du procédé selon l'invention.

D'une manière générale, un système de messagerie comprend un serveur central qui est, pendant un échange des messages instantanés, en communication avec en général une pluralité de clients dites "de messagerie instantanée". Un tel client est en fait un logiciel utilisé par un utilisateur physique, dans la suite appelé utilisateur tout court, qui lui permet d'échanger des messages avec des autres utilisateurs. Un tel serveur central peut d'ailleurs être un ensemble de plusieurs serveurs interconnectés l'un avec l'autre jouant toutefois fonctionnellement le rôle d'un seul serveur central. Un message échangé entre un premier utilisateur et un deuxième utilisateur transite depuis le client du premier utilisateur via le serveur central vers le client du deuxième utilisateur. Les utilisateurs du système peuvent ainsi échangés des messages instantanés l'un avec l'autre en utilisant le système de messagerie instantanée par le biais de leurs clients de messagerie instantanée respectifs. Un utilisateur est en général lié à une liste dite "de contact" dans laquelle l'utilisateur peut rassembler les identifiants des autres utilisateurs du système. Cette liste se trouve sur le serveur central. Quand un utilisateur démarre son client, ce client établit ensuite un lien entre le client et la liste de contact lié à cet utilisateur sur le serveur central. Une copie de la liste est réalisée du serveur central vers le client (copie réalisée à l'initiative du client). La liste est donc copiée en local sur client. Le client peut alors notamment l'afficher à l'écran d'un terminal. La liste de contact reste toutefois sur le serveur central donc à distance (ou en anglais : "remote"). De cette façon, un utilisateur dispose toujours de sa liste de contact habituelle, même s'il est en déplacement et se trouve par exemple dans un cybercafé. Pour les utilisateurs qui se trouvent dans sa liste de contact, l'utilisateur peut voir s'ils sont à priori disponibles (en anglais "en ligne") pour échanger des messages instantanés avec lui.

L'invention sera expliquée dans la suite sur la base d'une architecture IMS (sigle de l'expression anglaise IP Multimedia System). Des messages SIP (sigle de l'expression anglaise "Session Initiation Protocol") sont utilisés pour établir des communications entre les utilisateurs de l'architecture IMS. L'invention peut toutefois être utilisée dans tout système de messagerie instantanée.

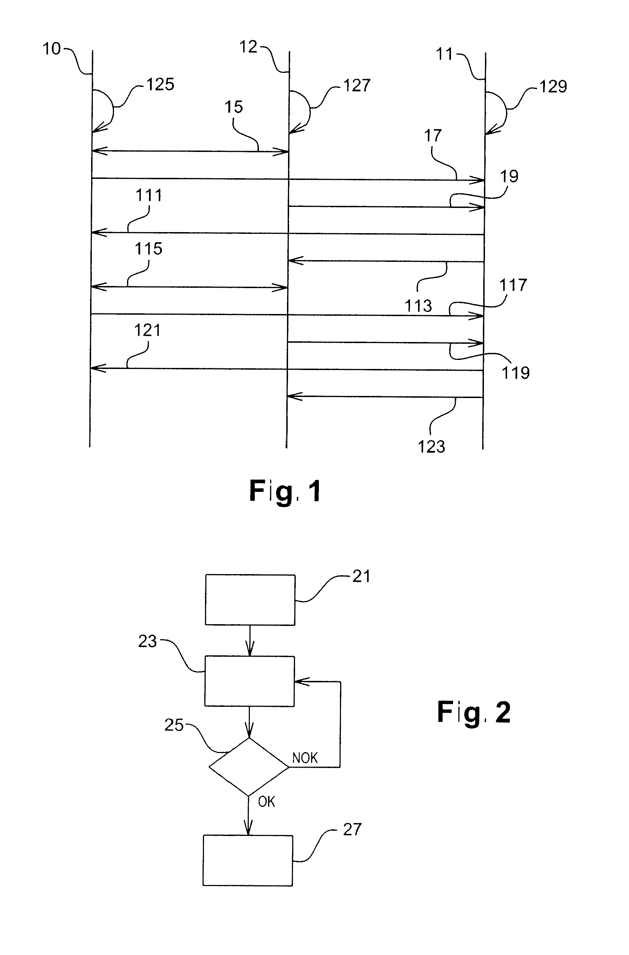

La figure 1 représente schématiquement un client 10 utilisé par un utilisateur d'un système de messagerie instantanée avec comme identifiant B et un client 12 utilisé par un autre utilisateur du système de messagerie instantanée avec comme identifiant C. Egalement représenté dans la figure 1 est un client 11 utilisé par un autre utilisateur du système de messagerie instantanée avec comme identifiant A. Dans la suite référence sera faite à un utilisateur du système de messagerie instantanée avec comme identifiant X, avec tout court l'utilisateur X. Par souci de simplification, dans la suite les hypothèses suivantes seront faites :
- le système de messagerie ne comprend que ces trois clients 10, 12, et 11 et, respectivement leurs utilisateurs B, C et A,
- l'utilisateur A a une liste de contact dans laquelle figure au moins l'utilisateur B (et, par conséquent, l'utilisateur B a une liste de contact dans laquelle figure au moins l'utilisateur A) et
- aucune session IM est initialement ouverte sur ce système de messagerie instantanée.

Les listes de contact liées aux utilisateurs A, B et C se trouvent sur le serveur central du système de messagerie instantanée. Le fait que l'utilisateur B est présent dans la liste de contact liée à l'utilisateur A veut dire qu'il existe un lien entre cette liste de contact depuis le serveur central vers le client de messagerie instantanée utilisé par l'utilisateur B.

L'invention comprend deux implémentations possibles, qui seront dans la suite indiqués avec "implémentation 1" et "implémentation 2".

Pendant une première étape 125 de démarrage, l'utilisateur B démarre son client 10. Après démarrage, le client 10 fait un lien entre la liste de contact de l'utilisateur B sur le serveur central et le client 10 même. Pour rappel, dans cette liste de contact de l'utilisateur B se trouve l'utilisateur A. Pendant une deuxième étape 127 de démarrage, l'utilisateur C démarre son client 12. Après démarrage, le client 12 fait un lien entre la liste de contact de l'utilisateur C sur le serveur central et le client 12 même.

Pendant une troisième étape 129 de démarrage, l'utilisateur A démarre son client 11. Après démarrage, le client 11 fait un lien entre la liste de contact de l'utilisateur A sur le serveur central et le client 11 même. Pour rappel, dans cette liste de contact de l'utilisateur A se trouve l'utilisateur B.

L'utilisateur B commande maintenant son client 10 d'ouvrir une session IM avec l'utilisateur C.

Le procédé comprend pour ce but une étape 15 d'ouverture d'une session IM entre le client 10 de l'utilisateur B et le client 12 correspondant de l'utilisateur C. Typiquement dans l'architecture IMS, cette étape 15 comprend l'envoi d'un message INVITE depuis le client 10 de l'utilisateur B vers le client 12 l'utilisateur C, l'envoi d'un message 200 OK depuis le client 12 de l'utilisateur C vers le client 10 de l'utilisateur B et l'envoi d'un message ACK depuis le client 10 de l'utilisateur B vers le client 12 l'utilisateur C. Ces messages sont des messages SIP.

La session de messagerie entre le client de l'utilisateur B et le client de l'utilisateur C a un identifiant unique qui permet d'identifier cette session. Cet identifiant est désigné avec l'expression anglaise "call identifier" ou Call-ID tout court.

Dans le cas de l'implémentation 1, l'information sur l'ouverture de la session IM est stockée sur le serveur central.

Dans le cas de l'implémentation 2, cette information est toutefois stockée localement chez chaque client concerné, donc dans le présent exemple localement chez le client 10 de l'utilisateur B ainsi que chez le client 12 de l'utilisateur C.

Pendant une étape de signalisation 17 suivante, un message de signalisation contenant l'information sur l'ouverture de la session IM est transmise vers le client 11 de l'utilisateur A. Suite à la réception de ce message, par exemple, le client 11 est amène à montrer l'information suivante :
Bienvenu A!
Votre statut est : connecté
Liste de vos contacts
B : connecté (en conversation avec C)

Par conséquent, l'utilisateur A est maintenant au courant de l'ouverture de la session IM entre l'utilisateur B et C.
Le texte "(en conversation avec C)" peut d'ailleurs changer en fonction du client IM.
Prenons un exemple de langues : si la langue du client est le français, le message peut être "(en conversation avec C)", et si la langue est l'anglais, le message sera "(In communication with C)" Donc, un client peut réagir différemment à la réception du message de signalisation et afficher des informations différentes.

A titre d'exemple, l'étape 17 comprend l'envoi d'un message de signalisation "ALERT_COMMUNICATE" depuis le client 10 de l'utilisateur B vers le client 11 de l'utilisateur A. Ce message "ALERT_COMMUNICATE" contient les champs suivants :

Un champ intitulé "Call-ID", avec comme contenu l'identifiant unique de la session IM ouverte entre l'utilisateur B et l'utilisateur C. Par exemple, le Call-ID pour la session IM entre le client 10 de l'utilisateur B et le client 12 de l'utilisateur C pourrait être "as8as7a@192.0.100.2".

Un champ intitulé "From" avec comme contenu un identifiant permettant de connaître l'origine du message "ALERT_COMMUNICATE", dans l'exemple décrit ici donc "client 10", l'expéditeur du message.

Un champ intitulé "To" avec comme contenu un identifiant permettant de connaître la destination du message "ALERT_COMMUNICATE", dans l'exemple décrit ici donc "client 11", le destinataire du message.

Un champ intitulé "With" avec comme contenu : les identifiants des utilisateurs qui participent à la session IM avec cette session Call-ID. Donc dans l'exemple évoqué ici pendant l'étape 17 ce champ contiendra "C". Si par contre la session est établie entre plus de deux utilisateurs, ce champ contiendra leur identifiants correspondants, par exemple "C, D, E".

Finalement, le message "ALERT_COMMUNICATE" comprend un champ intitulé "Action" avec comme contenu, dans le cas de l'étape 17 pour indiquer que la session IM vient d'être établie.

En réponse au message "ALERT_COMMUNICATE", un message "200 OK" est envoyé pendant une étape 111 de réponse depuis le client 11 de l'utilisateur A vers le client 10 de l'utilisateur B.

Il est possible que la session IM se termine pendant une étape 115 suivante. Typiquement dans l'architecture IMS, cette étape 115 comprend l'envoi d'un message BYE depuis le client 10 de l'utilisateur B vers le client 12 l'utilisateur C, et l'envoi d'un message 200 OK depuis le client 12 de l'utilisateur C vers le client 10 de l'utilisateur B. Il est aussi possible que cette étape comprenne l'envoi d'un message BYE depuis le client 12 de l'utilisateur C vers le client 10 l'utilisateur B, et l'envoi d'un message 200 OK depuis le client 10 de l'utilisateur B vers le client 12 de l'utilisateur C.

Ceci provoque également l'envoi d'un message de signalisation depuis le client 10 de l'utilisateur B vers le client 11 de l'utilisateur A pour que l'utilisateur sache que la session IM entre le client 10 et le client 12 n'est plus ouverte (est fermée).

Dans le cas de l'implémentation 1, l'information sur la fermeture de cette session IM est stockée sur le serveur central.

Dans le cas de l'implémentation 2, cette information est toutefois stockée localement chez chaque client concerné, donc dans le présent exemple localement chez le client 10 de l'utilisateur B ainsi que chez le client 12 de l'utilisateur C.

En reprenant l'exemple du message ALERT_COMMUNICATE. Celui-ci est envoyé pendant une étape 117 depuis le client 10 de l'utilisateur B vers le client 11 de l'utilisateur A. Ce message "ALERT_COMMUNICATE" contient les mêmes champs avec le même contenu que le message "ALERT_COMMUNICATE" envoyé pendant l'étape 17 sauf que champ intitulé "Action" a le contenu, "END" pour indiquer que la session a terminé.

En réponse au message "ALERT_COMMUNICATE", un message "200 OK" est envoyé pendant une étape 121 de réponse depuis le client 11 de l'utilisateur A vers le client 10 de l'utilisateur B.

Il est possible que l'utilisateur A figure aussi dans la liste de contact liée à l'utilisateur C. Dans ce cas, pendant une étape de signalisation 19, un message "ALERT_COMMUNICATE" est envoyé depuis le client 12 vers le client 11. Ce message "ALERT_COMMUNICATE" contient les mêmes champs avec le même contenu que le message "ALERT_COMMUNICATE" envoyé pendant l'étape 17, sauf que le champ "From" contient "client 12", et le champ "With" contient "B".

En réponse au message "ALERT_COMMUNICATE", un message "200 OK" est envoyé pendant une étape 113 de réponse depuis le client 11 de l'utilisateur A vers le client 12 de l'utilisateur C.

En cas de terminaison de la session IM pendant l'étape 115, un message ALERT_COMMUNICATE est envoyé pendant une étape 119 depuis le client 12 de l'utilisateur C vers le client 11 de l'utilisateur A. Ce message "ALERT_COMMUNICATE" contient les mêmes champs avec le même contenu que le message "ALERT_COMMUNICATE" envoyé pendant l'étape 19 sauf que champ intitulé "Action" a le contenu, "END" pour indiquer que la session a terminé.

En réponse au message "ALERT_COMMUNICATE", un message "200 OK" est envoyé pendant une étape 123 de réponse depuis le client 11 de l'utilisateur A vers le client 12 de l'utilisateur C.

En réalité plus qu'un utilisateur figurera vraisemblablement dans la liste de contact liée à l'utilisateur B et plus qu'un utilisateur figurera dans la liste de contact liée à l'utilisateur C. Dans ce cas, un message de signalisation est transmis vers tous les clients d'utilisateurs qui figurent dans la liste de contact liée à l'utilisateur B et vers tous les clients d'utilisateurs qui figurent dans la liste de contact liée à l'utilisateur B. Par ailleurs, dans le cas d'une session IM ouverte entre plus que deux utilisateurs, un message de signalisation est envoyé vers tous les utilisateurs qui figurent dans les listes de contact liées à tous ces utilisateurs.

Il en va de même pour une fermeture d'une session IM. De cette façon, tous les utilisateurs figurant dans la liste de contact d'un utilisateur sont au courant d'une session IM ouverte et impliquant cet utilisateur.

Les implémentations 1 et 2 diffèrent quant à la façon dont une mise à jour est effectuée. Une mise à jour est nécessaire dans le cas suivants :
- après qu'un utilisateur du système de messagerie ait démarré sont client, et
- après qu'un utilisateur du système de messagerie ait fait une modification dans la liste de contact liée à cet utilisateur (par exemple ajout d'un "nouveau" utilisateur à la liste de contact, ou, par contre, suppression contenu d'un utilisateur de la liste de contact)

Dans le cas de l'implémentation 1, après qu'un utilisateur du système de messagerie ait démarré sont client, ce dernier récupère du serveur central les informations sur les sessions IM ouvertes. Les informations sur les sessions IM ouvertes seront reçues sous forme de messages "ALERT_COMMUNICATE".

Quand un utilisateur A ajoute un nouvel utilisateur G dans sa liste de contacts, A récupère du serveur central toutes les sessions IM ouvertes de G, et G récupère du serveur central toutes les sessions IM ouvertes de A. Les informations sur les sessions IM ouvertes seront reçues sous forme de messages "ALERT_COMMUNICATE".

Dans le cas de l'implémentation 2, après qu'un utilisateur du système de messagerie ait démarré sont client, ce client envoie un message vers les clients dont les utilisateurs figurent dans la liste de contact liée à cet utilisateur pour récupérer l'information sur les sessions IM ouvertes et impliquant les utilisateurs présents sur cette liste. Par exemple, un message "REQUEST_ALERT_COMMUNICATE" est envoyé automatiquement du client de cet utilisateur aux clients des utilisateurs figurant dans sa liste de contacts. Suite à la réception d'un tel message, chaque client envoie au client de l'utilisateur expéditeur du message "REQUEST_ALERT_COMMUNICATE" les messages "ALERT_COMMUNICATE" correspondant à toutes les sessions IM ouvertes.

Quand un utilisateur A ajoute un nouvel utilisateur G dans sa liste de contacts, un message "REQUEST_ALERT_COMMUNICATE" est envoyé depuis le client de l'utilisateur A au client de l'utilisateur G. Suite à la réception de ce message, le client de l'utilisateur G envoie au client de l'utilisateur A les messages "ALERT_COMMUNICATE" correspondant à toutes les "sessions IM" ouvertes de G. Inversement, le client de l'utilisateur A envoie au client de l'utilisateur G les messages "ALERT_COMMUNICATE" correspondant à toutes les "sessions IM" ouvertes de A.

Comme il ressort de la description faite ci-dessus, si l'utilisateur A se trouve aussi dans la liste de contact 13 liée à l'utilisateur C, l'information sur l'ouverture (ou fermeture) de la session IM, s'affiche deux fois. Si la session est établie entre N utilisateurs et si l'utilisateur A se trouve dans toutes ces listes de contact, l'utilisateur A recevra donc N fois cette information.

Dans un mode de réalisation toutefois, le client 11 de l'utilisateur A contrôle la duplication de sessions. C'est-à-dire, si A reçoit deux ALERT_COMMUNICATE de B et de C, l'application affichera une seule fois la session entre B et C, comme suit :
- Le client 11 de l'utilisateur A a connaissance des sessions IM ouvertes entre les autres utilisateurs figurant dans la liste de contacts lié à l'utilisateur A
- Quand un nouveau message "ALERT_COMMUNICATE" est reçu, le client 11 de l'utilisateur A vérifie si la session IM en question est déjà affichée, si c'est le cas il ne l'affiche pas une deuxième fois, sinon il l'affiche.

Un mode de réalisation de l'invention sera expliqué en relation avec la figure 2. On part ici de l'hypothèse que l'utilisateur A est pendant une étape 21 préalable d'information mis au courant du fait que l'utilisateur B a une session de messagerie instantané établie avec l'utilisateur C. L'utilisateur A peut y avoir pris connaissance suite au déroulement des étapes 17 et/ou 19 décrites ci-dessus par rapport à la figure 1, dans ce cas, le client 11 de l'utilisateur A affiche les sessions qui sont actuellement ouvertes entre les utilisateurs qui figurent dans la liste de contact liée à l'utilisateur A, mais aussi par un autre moyen de communication, il est par exemple *a priori* possible qu'un des utilisateurs B ou C a informé l'utilisateur A par téléphone de la session qui est en cours entre eux.

Pendant une étape 23 de demande, le client de l'utilisateur A envoie une demande de participation à la session établie entre les utilisateurs B et C ou plutôt entre leurs clients 10 et 12 respectifs. Disons que l'utilisateur A envoie sa demande à l'utilisateur B, c'est-à-dire un message comprenant cette demande de participation est envoyé depuis le client de l'utilisateur A vers le client 10.

Ensuite, pendant une étape 25 de décision l'utilisateur B peut accepter oui ou non la demande faite par l'utilisateur A. Si l'utilisateur B accepte, d'une façon classique une session de messagerie est initié entre les clients des utilisateurs A, B et C pendant une étape 27 de session. Si non, le procédé retourne à l'étape 23 de demande. Il est à noter que l'utilisateur A peut envoyer sa demande de participation aux deux utilisateurs B et

C, simultanément ou successivement. Ensuite, pendant l'étape 25 de décision non seulement l'acceptation (ou le refus) de l'utilisateur B peut être pris en compte mais également l'acceptation (ou le refus) de l'utilisateur C.

Dans le cas d'une session préalablement établie entre plus de deux utilisateurs, tout utilisateur peut individuellement accepter ou refuser la demande faite par l'utilisateur A. Dans ce cas, il est possible que l'utilisateur A sera autorisé à participer à la session, par exemple seulement si les acceptations l'emportent sur les refus. De cette façon, un système de "démocratie" peut être mis en place. Un système de "veto" est également envisageable.

Dans une architecture IMS, le message envoyé pendant l'étape 23 de demande est, par exemple un message "COMMUNICATE_REQUEST". Ce message correspond à une demande de connexion à une session ouverte (entre B et C dans notre exemple). Ce message contient les champs "From", "To" et "Call-ID" pareils au message "ALERT_COMMUNICATE". Ce message est envoyé du client de l'utilisateur A vers le client 10 de l'utilisateur B et/ou le client 12 de l'utilisateur C via le serveur central du système de messagerie.

En réponse à ce message, un message "COMMUNICATE_RESPONSE", est envoyé depuis le client 10 de l'utilisateur B et/ou le client 12 de l'utilisateur C via le serveur central du système de messagerie vers le client de l'utilisateur A. Ce message "COMMUNICATE_RESPONSE" est identique au message "COMMUNI-CATE_REQUEST" mais contient un champ additionnel "Response" avec comme contenu "OK" en cas d'acceptation de la demande de connexion et avec comme contenu "NOK" en cas de refus de la demande de connexion.

Il est à noter que, dans le cas de l'implémentation 1, ce message transite via le serveur central.

Dans le cas comme décrit ci-dessus, le client de l'utilisateur A affiche par exemple l'information suivante :
Bienvenu A!
Votre statut est connecté
Liste de vos contacts :
B : en ligne (en conversation avec C : cliquez ici pour demander l'autorisation d'entrer dans cette discussion)

Comme dans le cas dans la signalisation de l'ouverture d'une session décrit ci-dessus, le client de l'utilisateur A définit et affiche ce message. En fonction de la langue choisie par l'utilisateur, ce message pourrait avoir un format différent.

Le client 10 de l'utilisateur B affiche par exemple :

Bienvenu B!
Votre statut est connecté
Liste de vos contacts :
A : en ligne
A demande d'entrer dans la conversation que vous avez avec C : accepter ou refuser?

La même remarque quant au format de ce message s'applique.

## Revendications

1. Procédé comprenant :
- une étape d'établissement (15) d'une session de messagerie instantanée entre un premier client (10) d'un système de messagerie instantanée et au moins un deuxième client (12) dudit système, **caractérisé en ce que** ledit procédé comprend :
- au moins une étape de signalisation (17) dudit établissement à au moins un troisième client (11) dudit système.

2. Procédé selon la revendication 1 **caractérisé en ce que** ledit troisième client appartient à un ensemble de clients liés au premier client.

3. Procédé selon l'une quelconque des revendications 1 à 2 **caractérisé en ce qu'**il comprend une seule étape de visualisation dudit établissement chez ledit troisième client.

4. Procédé selon l'une quelconque des revendications 1 à 3 **caractérisé en ce que** le procédé comprend en outre :
- une étape (23) de formulation d'une demande de participation à ladite session par ledit troisième client (11) et
- une étape (25) de traitement de ladite demande par au moins ledit premier client (10).

5. Serveur apte à être utilisé dans un système de messagerie instantanée comprenant des moyens de signalisation à un troisième client dudit système d'un établissement d'une session de messagerie instantanée entre un premier client dudit système et au moins un deuxième client dudit système, et des moyens de sauvegarde dudit établissement.

6. Client apte à être utilisé dans un système de messagerie instantanée comprenant des moyens de signalisation à au moins un troisième client dudit système d'un établissement d'une session de messagerie instantanée entre ledit client et au moins un deuxième client dudit système, et des moyens de sauvegarde dudit établissement.

7. Client apte à être utilisé dans un système de messagerie instantanée comprenant des moyens de réception de l'information sur un établissement d'une session de messagerie instantanée entre un premièr client dudit système et au moins un deuxième client dudit système et des moyens de visualisation dudit établissement.

8. Système de messagerie instantanée comprenant un serveur selon la revendication 5, ou au moins un client selon la revendication 6 et au moins un client selon la revendication 7.

9. Client selon la revendication 7 comprenant des moyens de formulation d'une demande de participation à ladite session.

10. Client selon la revendication 6 comprenant des moyens de traitement d'une demande de participation à ladite session.
